(19) **Europäisches Patentamt / European Patent Office / Office européen des brevets**

(11) **EP 1 929 788 B1**

(12) **EUROPEAN PATENT SPECIFICATION**

(45) Date of publication and mention
of the grant of the patent:
**15.10.2014 Bulletin 2014/42**

(51) Int Cl.:
***H04N 7/00*** (2011.01)

(21) Application number: **06815728.8**

(22) Date of filing: **27.09.2006**

(86) International application number:
**PCT/US2006/037944**

(87) International publication number:
**WO 2007/038697 (05.04.2007 Gazette 2007/14)**

(54) **FRAME INTERPOLATION USING MORE ACCURATE MOTION INFORMATION**

EINZELBILD-INTERPOLATION UNTER VERWENDUNG GENAUERER BEWEGUNGSINFORMATIONEN

INTERPOLATION DE TRAMES UTILISANT DES INFORMATIONS DE MOUVEMENT PLUS PRECISES

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.09.2005 US 721346 P**

(43) Date of publication of application:
**11.06.2008 Bulletin 2008/24**

(73) Proprietor: **QUALCOMM Incorporated**
**San Diego CA 92121 (US)**

(72) Inventors:
- **SHI, Fang**
  **California 92130 (US)**
- **RAVEENDRAN, Vijayalakshmi R.**
  **California 92130 (US)**

(74) Representative: **Catesby, Olivia Joanne et al**
**Tomkins & Co.**
**5 Dartmouth Road**
**Dublin 6 (IE)**

(56) References cited:
EP-A- 0 782 343  WO-A-2006/007527
WO-A-2007/038728  US-A- 5 557 684
US-A1- 2004 252 759  US-B1- 6 385 245

- **SHAN LIU ET AL: "NONLINEAR MOTION-COMPENSATED INTERPOLATION FOR LOW-BIT-RATE VIDEO" PROCEEDINGS OF THE SPIE, SPIE, BELLINGHAM, VA, US, vol. 4115, 2000, pages 203-213, XP008077893 ISSN: 0277-786X**

- **BENOIS-PINEAU J ET AL: "A NEW METHOD FOR REGION-BASED DEPTH ORDERING IN A VIDEO SEQUENCE: APPLICATION TO FRAME INTERPOLATION" JOURNAL OF VISUAL COMMUNICATION AND IMAGE REPRESENTATION, ACADEMIC PRESS, INC, US, vol. 13, no. 3, September 2002 (2002-09), pages 363-385, XP008078045 ISSN: 1047-3203**

- **MUSMANN H G ET AL: "ADVANCES IN PICTURE CODING" PROCEEDINGS OF THE IEEE, IEEE. NEW YORK, US, vol. 73, no. 4, 1 April 1985 (1985-04-01), pages 523-548, XP002057834 ISSN: 0018-9219**

- **DANE G ET AL INSTITUTE OF ELECTRICAL AND ELECTRONICS ENGINEERS: "Analysis of motion vector errors in motion compensated frame rate up conversion" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 November 2003 (2003-11-09), pages 1534-1538, XP010701803 ISBN: 0-7803-8104-1**

- **GRAMMALIDIS N ET AL: "TEMPORAL FRAME INTERPOLATION FOR STEREOSCOPIC SEQUENCES USING OBJECT-BASED MOTION ESTIMATION AND OCCLUSION DETECTION" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. VOL. 2, 23 October 1995 (1995-10-23), pages 382-385, XP000623988 ISBN: 0-7803-3122-2**

EP 1 929 788 B1

- XIAOHUAN LI ET AL: "An adaptive coding scheme using affine motion model for MPEG P-VOP" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 3, 17 May 2004 (2004-05-17), pages 717-720, XP010718290 ISBN: 0-7803-8484-9
- KUMAR S ET AL: "Global motion estimation in frequency and spatial domain" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 3, 17 May 2004 (2004-05-17), pages 333-336, XP010718194 ISBN: 0-7803-8484-9
- HIROHISA JOZAWA ET AL: "TWO-STAGE MOTION COMPENSATION USING ADAPTIVE GLOBAL MC AND LOCAL AFFINE MC" IEEE TRANSACTIONS ON CIRCUITS AND SYSTEMS FOR VIDEO TECHNOLOGY, IEEE SERVICE CENTER, PISCATAWAY, NJ, US, vol. 7, no. 1, February 1997 (1997-02), pages 75-85, XP000678881 ISSN: 1051-8215
- KOENEN R ET AL: "MPEG-4: CONTEXT AND ABJECTIVES", SIGNAL PROCESSING. IMAGE COMMUNICATION, ELSEVIER SCIENCE PUBLISHERS, AMSTERDAM, NL, vol. 9, no. 4, 1 May 1997 (1997-05-01), pages 295-304, XP000700942, ISSN: 0923-5965, DOI: 10.1016/S0923-5965(97)00003-9
- PEREIRA ET AL: "MPEG-4: Why, what, how and when?", SIGNAL PROCESSING. IMAGE COMMUNICATION, ELSEVIER SCIENCE PUBLISHERS, AMSTERDAM, NL, vol. 15, no. 4-5, 1 January 2000 (2000-01-01), pages 271-279, XP027357191, ISSN: 0923-5965 [retrieved on 2000-01-01]
- TUDOR P N: "TUTORIAL MPEG-2 VIDEO COMPRESSION", ELECTRONICS AND COMMUNICATION ENGINEERING JOURNAL, INSTITUTION OF ELECTRICAL ENGINEERS, LONDON, GB, vol. 7, no. 6, 1 December 1995 (1995-12-01), pages 257-264, XP000545121, ISSN: 0954-0695, DOI: 10.1049/ECEJ:19950606
- KNOLL A: "DER MPEG-2-STANDARD ZUR DIGITALEN CODIERUNG VON FERNSEHSIGNALEN", FERNMELDE-INGENIEUR, BAD WINSHEIM, DE, vol. 47, no. 7, 1 July 1993 (1993-07-01), pages 1-33, XP000904778, ISSN: 0015-010X

**Description**

**TECHNICAL FIELD**

The disclosure relates to digital multimedia encoding and decoding and, more particularly, to techniques for interpolating skipped frames for multimedia applications.

**BACKGROUND**

A number of different video encoding standards have been established for coding digital multimedia sequences. The Moving Picture Experts Group (MPEG), for example, has developed a number of standards including MPEG-1, MPEG-2 and MPEG-4. Other examples include the International Telecommunication Union (ITU) H.263 standard, and the emerging ITU H.264 standard, which is also set forth in MPEG-4 Part 10, entitled "Advanced Video Coding." These video coding standards generally support improved transmission efficiency of multimedia sequences by coding data in a compressed manner. Compression reduces the overall amount of data that needs to be transmitted for effective transmission of multimedia frames. Video coding is used in many contexts, including video streaming, video camcorder, video telephony (VT) and video broadcast applications, over both wired and wireless transmission media.

The MPEG-4, ITU H.263 and ITU H.264 standards, for example, support video coding techniques that utilize similarities between successive multimedia frames, referred to as temporal or Inter-frame correlation, to provide Inter-frame compression. The Inter-frame compression techniques exploit data redundancy across frames by converting pixel-based representations of multimedia frames to motion representations. Frames encoded using Inter-frame techniques are referred to as predictive ("P") frames or bi-directional ("B") frames. Some frames, referred to as intra ("I") frames, are coded using spatial compression, which is non-predictive. In addition, some frames may include a combination of both intra- and inter-coded blocks.

In order to meet low bandwidth requirements, some multimedia applications, such as video telephony or video streaming, reduce the bit rate by coding video at a lower frame rate using frame skipping. A skipped frame may be referred to as an "S" frame. Unfortunately, low frame rate video can produce artifacts in the form of motion jerkiness. Therefore, frame interpolation, such as frame rate up conversion (FRUC), is typically used at the decoder to interpolate the content of skipped frames.

A variety of FRUC techniques have been developed, and can be divided into two categories. A first FRUC category includes frame repetition (FR) and frame averaging (FA), which both use a combination of video frames without consideration of motion. These algorithms provide acceptable results in the absence of motion. When there is significant frame-to-frame motion, however, FR tends to produce motion jerkiness, while FA produces blurring of objects. A second FRUC category relies on advanced conversion techniques that employ motion. In this category, the quality of an interpolated frame depends on the difference between estimated motion and true object motion.

Shan Liu et al.: "Non-linear Motion-compensated Interpolation for Low Bit rate Video", Proceedings of SPIE, vol. 4115 (2000), pages 203-213, describes motion-compensated frame interpolation using affine motion.

**SUMMARY**

In general, this disclosure describes video encoding and decoding techniques that facilitate more accurate interpolation of skipped video frames. In particular, techniques are described for applying motion information that indicates motion for skipped video frames based on translational motion and at least one other motion parameter to interpolate the skipped video frames. The motion information may, for example, indicate motion based on a motion model based on three or more motion parameters, in contrast to conventional two-parameter translational motion vector models. Utilizing motion information that models larger numbers of motion parameters permits video decoders to more accurately interpolate skipped frames, resulting in a reduction of visual artifacts in the interpolated video information, and supporting a more effective FRUC process.

In a conventional video decoder, the decoder obtains motion information that indicates motion for the skipped frame based only on translational motion, and applies the translational motion vectors to interpolate the skipped frame. However, the motion vectors for the skipped frame are typically obtained from motion vectors of video frames adj acent to the skipped frame and therefore can result in various artifacts in the interpolated frame. Moreover, the motion vectors provide only translational motion information, resulting in various other artifacts in the interpolated frame due to camera motion other than translational motion.

The object of the invention is achieved by claims 1, 6, 16, 17, 22 and 29. Advantageous features are disclosed in the dependent claims.

A video decoder that performs frame interpolation in accordance with the techniques of this disclosure, however, may reduce the amount of visual artifacts in the interpolated frame by applying more accurate motion information to interpolate the skipped video frames. In particular, in some embodiments, the decoder obtains motion information that indicates motion for the skipped video frame based on translational motion and at least one other motion parameter and applies the motion information to interpolate the skipped video frame.

In one embodiment, a method for processing digital video data comprises obtaining motion information that indicates motion for a skipped video frame based on translational motion and at least one other motion parameter and applying the motion information to interpolate the skipped video frame.

In another embodiment, an apparatus for processing digital video data comprises an interpolation module that obtains motion information that indicates motion for a skipped video frame based on translational motion and at least one other motion parameter, and applies the motion information to interpolate the skipped video frame.

In another embodiment, a processor for processing digital video data is configured to obtain motion information that indicates motion for a skipped video frame based on translational motion and at least one other motion parameter, and apply the motion information to interpolate the skipped video frame..

In another embodiment, a device for processing digital video data comprises a processor configured to obtain motion information that indicates motion for a skipped video frame based on translational motion and at least one other motion parameter, and apply the motion information to interpolate the skipped video frame.

In a further embodiment, an apparatus for processing digital video data comprises means for obtaining motion information that indicates motion for a skipped video frame based on translational motion and at least one other motion parameter and means for interpolating the skipped video frame by applying the motion information.

In another embodiment, a machine-readable medium comprises instructions that upon execution cause a machine to obtain motion information that indicates motion for a skipped video frame based on translational motion and at least one other motion parameter and apply the motion information to interpolate the skipped video frame.

In yet another embodiment, a video encoding method comprises generating motion information that indicates motion for a skipped video frame based on translational motion and at least one other motion parameter and encoding the motion information within at least one video frame.

In another embodiment, an apparatus for encoding digital video data comprises an analysis module that analyzes a skipped video frame and generates motion information that indicates motion for the skipped video frame based on translational motion and at least one other motion parameter and an assembly module that encodes the motion information within at least one video frame.

In a further embodiment, an apparatus for encoding digital video data comprises means for generating motion information that indicates motion for a skipped video frame based on translational motion and at least one other motion parameter and means for encoding the motion information within at least one video frame.

In another embodiment, a processor for processing digital video data is configured to generate motion information that indicates motion for a skipped video frame based on translational motion and at least one other motion parameter and encode the motion information within at least one video frame.

In another embodiment, a machine-readable medium comprises instructions that upon execution cause a machine to generate motion information that indicates motion for a skipped video frame based on translational motion and at least one other motion parameter and encode the motion information within at least one video frame.

The techniques described in this disclosure may be implemented in hardware, software, firmware, or any combination thereof. If implemented in software, the techniques may be realized in part by a machine-readable medium comprising program code containing instructions that, when executed, performs one or more of the methods described herein. The techniques described in this disclosure may be implemented in processing circuitry, which may be embodied by a chip or chipset suitable for incorporation in a wireless communication device (WCD) or other device. In some embodiments, the disclosure is directed to a device that incorporates such circuitry.

The details of one or more embodiments are set forth in the accompanying drawings and the description below. Other features, objects, and advantages of this disclosure will be apparent from the description and drawings, and from the claims.


## BRIEF DESCRIPTION OF DRAWINGS

FIG. 1 is a block diagram illustrating a video encoding and decoding system configured to apply motion information that indicates motion for skipped video frames based on translational motion and at least one other motion parameter to interpolate the skipped video frames.

FIG 2 is a block diagram illustrating an exemplary interpolation decoder module for use in a video decoder.

FIG. 3 is a block diagram illustrating another exemplary interpolation decoder module for use in a video decoder.

FIG. 4 is a block diagram illustrating a frame processing module for use in a video encoder.

FIG. 5 is a flow diagram illustrating exemplary operation of a decoder interpolating a skipped video frame using motion information that indicates motion for a skipped frame based on translational motion and at least one other motion parameter.

FIG. 6 is a flow diagram illustrating exemplary operation of an encoder generating motion information for a portion of a skipped frame based on an affine motion model.

FIG. 7 is a flow diagram illustrating exemplary operation of a decoder converting motion information that indicates motion for a skipped frame based on translational motion and at least one other motion parameter to motion information based only on translational motion.

FIG. 8 is a block diagram illustrating a video encoding and decoding system configured to apply motion information that indicates motion for skipped video frames based on translational motion and at least one other motion parameter to interpolate the skipped video frames.

## DETAILED DESCRIPTION

This disclosure describes encoding and decoding techniques that facilitate more accurate interpolation of skipped ("S") video frames. In particular, techniques are described for applying motion information that indicates motion for skipped video frames based on translational motion and at least one other motion parameter to interpolate the skipped video frames. The motion information may, for example, indicate motion based on a motion model based on three or more motion parameters, in contrast to conventional two parameter translational motion vector models. Utilizing motion information that models a larger number of motion parameters permits decoders to more accurately interpolate skipped frames, resulting in a reduction of visual artifacts in the interpolated video information.

In a conventional decoder, the decoder obtains motion information that indicates motion for the skipped frame based only on translational motion, and applies the translational motion vectors to interpolate the skipped frame. However, the motion vectors for the skipped frame are typically obtained from motion vectors of video frames adjacent to the skipped frame and therefore can result in various artifacts in the interpolated frame. Moreover, the motion vectors provide only translational motion information, resulting in various other artifacts in the interpolated frame due to camera motion other than translational motion.

A decoder that performs frame interpolation in accordance with the techniques of this disclosure, however, may reduce the amount of visual artifacts in the interpolated frame by applying more accurate motion information to interpolate the skipped video frames. In particular, the decoder obtains motion information that indicates motion for the skipped video frame based on translational motion and at least one other motion parameter and applies the motion information to interpolate the skipped video frame.

The decoder may generate the more accurate motion information for the skipped video frame using motion information associated with one or more adjacent video frames. Alternatively, the decoder may receive the more accurate motion information for the skipped video frame from an encoder that embeds the motion information in one or more transmitted video frames. In this manner, the encoder transmits motion information associated with the skipped video frames to assist the decoder in interpolating the skipped video frames. In either case, the decoder more accurately interpolates the skipped frame by applying motion information that indicates motion for the skipped video frame based on translational motion and at least one other motion parameter.

In one embodiment, both the encoder and decoder may be configured to support use of motion information that indicates motion for a skipped frame based on translational motion and at least one other motion parameter, such as motion information based on an affine motion model. In this case, the encoder generates motion information based on the affine model and transmits the motion information to the decoder to assist the decoder in interpolation of the skipped frame. The encoder may transmit the motion information for the skipped frame within one or more encoded frames, such as within a P frame that precedes or follows the skipped frame, or within a video frame that is dedicated to the skipped frame motion information and transmitted independently of the encoded frames.

In another embodiment, the encoder is configured to generate motion information that indicates motion for a skipped frame based on translational motion and at least one other motion parameter. The decoder, however, may not be configured to use such motion information. In this case, the encoder generates and transmits the motion information for the skipped frame based on translational motion and at least one other motion parameter. The decoder converts the received motion information into motion vectors that indicate motion based only on translational motion, and uses the translational motion vectors to interpolate the skipped video frame.

In a further embodiment, only the decoder is configured to use motion information that indicates motion for a skipped frame based on translational motion and at least one other motion parameter. Thus, the decoder does not receive motion information that indicates motion for the skipped frame based on translational motion and at least one other motion parameter from the encoder. Instead, the decoder generates motion information that indicates motion for the skipped frame based on translational motion and at least one other motion parameter from motion information associated with one or more video frames adjacent the to the skipped video frame.

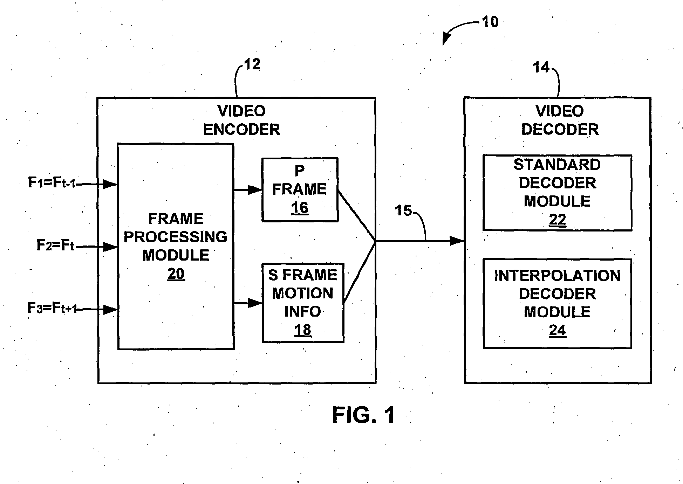

FIG. 1 is a block diagram illustrating a video encoding and decoding system 10 configured to apply motion information that indicates motion for skipped video frames based on translational motion and at least one other motion parameter to interpolate the skipped video frames. As shown in FIG. 1, system 10 includes a video encoder 12 and a video decoder 14 connected by a transmission channel 15. Encoded multimedia sequences, such as video sequences, may be transmitted from video encoder 12 to video decoder 14 over communication channel 15. Transmission channel 15 may be a wired or wireless medium. To this end, video encoder 12 and video decoder 14 may include a transmitter and a receiver (not shown) to facilitate such communication. System 10 may also support bi-directional video transmission, e.g., for video telephony. Reciprocal encoding, decoding, multiplexing (MUX) and demultiplexing (DEMUX) components may be provided on opposite ends of transmission channel 15. In some embodiments, video encoder 12 and video decoder 14 may be embodied within video communication devices such as wireless communication devices equipped for video streaming, video telephony, or both.

System 10 may support video telephony according to the Session Initiated Protocol (SIP), ITU H.323 standard, ITU H.324 standard or other standards. Video encoder 12 generates encoded video data according to a video compression standard, such as MPEG-2, MPEG-4, ITU H.263 or ITU H.264, which is also set forth in MPEG-4 Part 10, entitled "Advanced Video Coding." Although not shown in FIG. 1, video encoder 12 and video decoder 14 may be integrated with an audio encoder and decoder, respectively, and include appropriate MUX-DEMUX modules to handle audio and video portions of a data stream. The MUX-DEMUX modules may conform to the ITU H.223 multiplexer protocol, or other protocols such as the user datagram protocol (UDP). Alternatively, system 10 may use the SIP protocol.

Video encoder 12 and video decoder 14 may be implemented as one or more processors, digital signal processors, application specific integrated circuits (ASICs), field programmable gate arrays (FPGAs), discrete logic, software, hardware, firmware or any combinations thereof. The illustrated components of video encoder 12 and video decoder 14 may be included in one or more encoders or decoders, either of which may be integrated as part of an encoder/decoder (CODEC).

Encoder 12 encodes video information at a reduced frame rate using frame skipping. More specifically, encoder 12 encodes and transmits a plurality of video frames to decoder 14. The plurality of video frames may include one or more intra ("I") frames, predictive ("P") frames or bi-directional ("B") frames. Although video encoder 12 is illustrated in FIG. 1 as generating and transmitting a P frame 16, encoder 12 may additionally generate and transmit other P frames as well as one or more I frames and B frames. P frame 16 is a predictive frame that includes sufficient information to permit video decoder 14 to decode and present a frame of video information. In particular, one or more motion vectors and quantized prediction errors are encoded for P frame 16. To encode video information at a reduced frame rate, encoder 12 may skip particular frames (referred to as skipped frames or S frames) according to a frame skipping function designed to reduce the overall amount of encoded information for bandwidth conservation across transmission channel 15. In other words, encoder 12 does not actually encode and transmit the S frames. Instead, decoder 14 interpolates the skipped frame to produce a frame of video information.

In the example of FIG. 1, video encoder 12 includes a frame processing module 20 configured to process incoming frames of video information, such as frames $F_1$, $F_2$ and $F_3$. Based on analysis of incoming frames $F_1$, $F_2$ and $F_3$, frame processing module 20 determines whether to encode the incoming frames as P frames or skip the frames. $F_2$ represents the frame to be skipped, while frames $F_1$ and $F_3$ represent the previous and subsequent P frames, respectively.

Video decoder 14 receives the encoded video frames from encoder 12 and decodes the video frames. To handle decoding of P frames and interpolation of S frames, video decoder 14 includes a standard decoder module 22 and an interpolation decoder module 24. Standard decoder module 22 applies standard decoding techniques to decode each P frame, such as P frame 16, sent by encoder 12. As described above, the information encoded in each P frame is sufficient to permit standard decoder module 22 to decode and present a frame of video information. Standard decoder module 22 may also decode other coded frames such as I frames or B frames.

Interpolation decoder module 24 interpolates skipped video frames, such as frame $F_2$, by applying motion information that indicates motion for the skipped video frame based on translational motion and at least one other motion parameter. Although the skipped frame is not transmitted to decoder 14, the motion information supports interpolation of the contents of the skipped frame. By utilizing motion information that indicates motion for the skipped frame based on translational motion and at least one other motion parameter, interpolation decoder module 24 may reduce visual artifacts in the interpolated frame and thereby achieve improved visual quality in the video output.

As an example, interpolation decoder module 24 may obtain motion information that indicates motion for the skipped video frame based on an affine motion model, and apply the motion information to interpolate the skipped video frame. The affine motion model approximates not only translational motion, but also rotation, shearing and scaling. The affine motion model may be represented by the equation;

$$\begin{bmatrix} x \\ y \end{bmatrix} = \begin{bmatrix} a1 & a2 \\ a3 & a4 \end{bmatrix} \begin{bmatrix} x' \\ y' \end{bmatrix} + \begin{bmatrix} a5 \\ a6 \end{bmatrix} \qquad\qquad (1)$$

where (x', y') and (x, y) denote the image coordinates of a point before and after the displacement, respectively, and a1- a6 denote coefficients of the affine transform. The motion information based on an affine motion model provides a six-parameter approximation of the motion of the skipped frame as opposed to the two parameter approximation of conventional translational motion vectors.

The motion information may indicate motion for the skipped frame based on motion models other than the affine motion model. The motion information may, for example, indicate motion based on motion models that account for translational motion and at least one of scaling, shearing, rotation, panning and tilting. For example, motion information may indicate motion based on a rigid model (three parameters), a rigid and scale model (four parameters), bilinear model (eight parameters), or other motion model that indicates motion based on translational motion as well as at least one other motion parameter, e.g., planar homography. Additionally, the motion information may indicate motion based on a non-rigid motion model, such as object deformation model or a pixel-based motion model.

In one embodiment, interpolation decoder module 24 generates the motion information that indicates motion for the skipped video frame based on translational motion and at least one other motion parameter. As will be described in detail, interpolation decoder module 24 generates the motion information for the skipped frame using motion information associated with one or more video frames adjacent to the skipped video frame. As an example, interpolation decoder module 24 may generate the motion information that indicates motion for the skipped frame based on translational motion and at least one other motion parameter using translational motion vectors associated with a previous reference frame and a subsequent reference frame. Alternatively, interpolation decoder module 24 may generate the motion information that indicates motion for the skipped frame based on translational motion and at least one other motion parameter using motion information based on translational motion and at least one other motion parameter associated with a previous reference frame and a subsequent reference frame. In this manner, the interpolation technique are implemented solely within the decoder.

Alternatively, interpolation decoder module 24 may rely on assistance from video encoder 12 to interpolate the skipped frame. In particular, encoder 12 may generate, encode, and transmit the motion information for the skipped frames, such as S frame motion information 18, to interpolation decoder module 24 to assist in interpolation of the skipped frames. Encoder 14 may transmit S frame motion information 18 to decoder 14 in a dedicated frame or in one or more transmitted video frames, such as P frame 16. In this manner, interpolation decoder module 24 interpolates the skipped frame with the assistance of encoder 12. S frame motion information 18 indicates motion for the skipped frame based on translational motion and at least one other motion parameter. Video encoder 12 may estimate the motion information for the skipped frame by analyzing motion between the skipped frame and a previous frame, a subsequent frame, both a previous and subsequent frame, or any number of adjacent frames. In this manner, Video encoder 12 generates and transmits information associated with the skipped frame. Alternatively, video encoder 12 may estimate the motion information for the skipped frame by analyzing motion between a previous frame and a subsequent frame.

Encoder 12 may generate and transmit S frame motion information 18 that indicates motion for the entire skipped video frame, usually referred to as global motion information. To reduce the bandwidth requirements, however, encoder 12 may be configured to generate and transmit S frame motion information 18 only for a portion of the skipped frame, which may be referred to as object-based or local motion information. In particular, encoder 12 may generate S frame motion information 18 that indicates motion for selected video blocks within the skipped frame. In this case, encoder 12 may also generate location information that describes the portion, e.g., video blocks, of the skipped video frame associated with the motion information. Thus, the motion information may include not only the affine model approximation itself, but also an object or video block description. Other video blocks of the skipped frame may be interpolated accurately without the potential need for particular motion information. The video blocks, often referred to as macroblocks (MBs), are typically 4x4, 8x8 or 16x16 blocks of pixels within the skipped frame.

Moreover, encoder 12 may generate and transmit other information associated with the skipped frame to assist decoder 14 in interpolation of the skipped frame. In addition to the motion information, encoder 12 may, for example, generate and transmit information that specifies a particular interpolation equation to be used by video decoder 14 in interpolation of the skipped frame, or particular interpolation equations to be used for selected video blocks, e.g., macroblocks (MBs) or smaller blocks, within the skipped frame.

Video decoder 14 may be specially configured to recognize and make use of S frame motion information 18 transmitted by video encoder 12. If video decoder 14 is not equipped to recognize S frame motion information 18, however, the information can be ignored, and interpolation can proceed according to interpolation techniques otherwise applied by video decoder 14. For example, video decoder 14 may generate the more accurate motion information for the skipped frame when video decoder 14 is not equipped to recognize skipped frame information embedded within the received video frames.

A number of other elements may also be included in the encoding and decoding system 10, but are not specifically illustrated in FIG. 1 for simplicity and ease of illustration. The architecture illustrated in FIG. 1 is merely exemplary, as the techniques described herein may be implemented with a variety of other architectures. Moreover, the features illustrated in FIG. 1 may be realized by any suitable combination of hardware and/or software components.

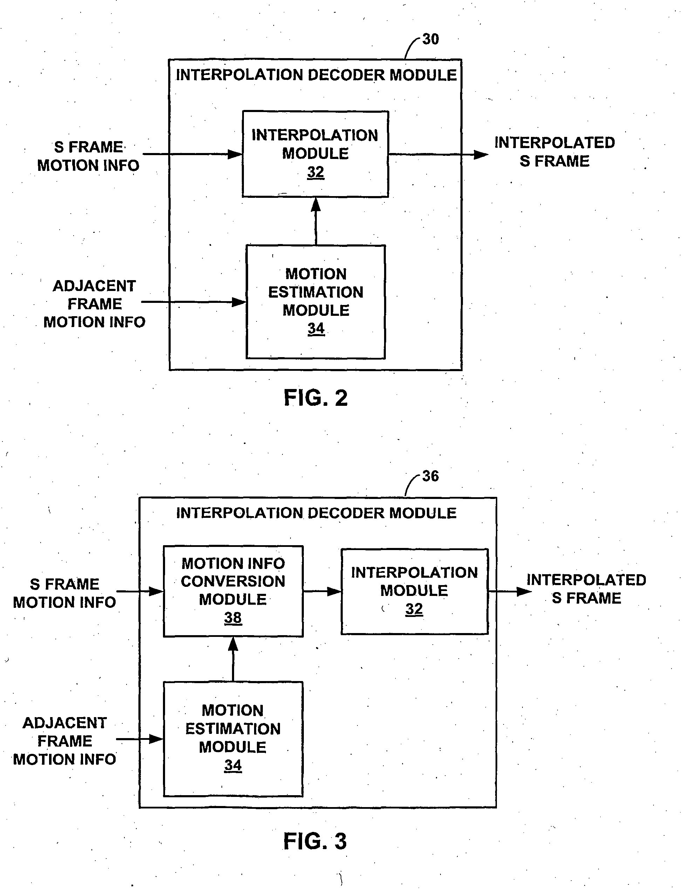

FIG. 2 is a block diagram illustrating an exemplary interpolation decoder module 30 for use in a video decoder, such as video decoder 14 of FIG. 1. Interpolation decoder module 30 includes an interpolation module 32 and a motion estimation module 34 that operate to produce an interpolated frame. Interpolation module 32 applies motion information that indicates motion for a skipped frame based on translational motion and at least one other motion parameter to interpolate the skipped video frame.

Interpolation module 32 may receive the motion information from video encoder 12 (FIG. 1). As described above, video encoder 12 may generate motion information that indicates motion for a skipped frame based on translational motion and at least one other motion parameter, and encode the motion information in one or more video frames to assist interpolation decoder module 30 in interpolation of the skipped video frame. In this case, interpolation module 32 applies the received motion information for the skipped frame to interpolate the skipped frame.

Interpolation decoder module 30 may, however, need to generate the motion information that indicates motion for the skipped frame. For example, video encoder 12 may not be configured to transmit motion information for the skipped frame or only to transmit a portion of the motion information for the skipped frame. Alternatively, interpolation decoder module 30 may not be configured to recognize motion information for the skipped frame encoded within the transmitted video frames. In either case, motion estimation module 34 generates at least a portion of the motion information for the skipped frame using motion information associated with one or more video frames adjacent to the skipped video frame. For example, motion estimation module 34 may generate the motion information for the skipped frame based on one or more translational motion vectors associated with one or more reference frames, such as a previous frame, a previous frame and a subsequent frame, or more than two adjacent video frames. Additionally, motion estimation module 34 may generate motion information based on translational motion and at least one other motion parameter for video frames adjacent to the skipped video frame. For example, motion estimation module 34 may generate motion information for P frame 16.

As an example, preceding and subsequent reference frames received by decoder 14 may be subdivided into N macroblocks and have a translational motion vector associated with each of the macroblocks. Motion estimation module 34 estimates translational motion vectors for skipped video frame based on the translational motion vectors associated with the macroblocks of the reference frames. Motion estimation module 34 estimates the parameters of the affine model using the plurality of translational motion vectors. Each translational motion vector corresponds to a two parameter equation (i.e., $x1 = x2+a$, $y1 = y2+c$). In one embodiment, motion estimation module 34 may generate motion information based on the affine motion module using as little as three translational motion vectors. However, motion estimation module 34 typically will have much more than three translational motion vectors. Various mathematical models may be employed to derive the affine motion parameters from the plurality of translational motion vectors. Motion estimation module 34 may, for example, derive the affine motion parameters using least squares estimation. Motion estimation module 34 may, for example, estimate the affine model based on the least degradation in the performance of a piecewise planar motion vector field approximation.

Alternatively, motion estimation module 34 may estimate motion for only a portion of the skipped frame, such as particular objects or macroblocks within the skipped frame. In this case, motion estimation module 34 generates translational motion vectors for all macroblocks of the skipped frame. Motion estimation module 34 approximates the affine motion model parameters from the translational motion vectors as described above. Each macroblock is reconstructed on a pixel by pixel basis using the generated affine motion model. Additionally, each macroblock is reconstructed using the translational motion vectors used to approximate the affine motion parameters. The distortion of the macroblocks reconstructed using the affine motion model parameters are compared with the corresponding macroblocks reconstructed using the translational motion vectors. If the distortion is above a predetermined threshold, the affine motion model is determined to not accurately approximate the macroblock associated with the large distortion and the macroblock is removed from the object. In other words, the affine model estimation is deemed to not apply to the particular macroblock. After analyzing the distortion between all the reconstructed macroblocks, the affine motion model parameters are determined to only apply to the macroblocks in the frame that have distortion values below the threshold.

FIG. 3 is a block diagram illustrating another exemplary interpolation decoder module 36 for use in a video decoder. Interpolation decoder module 36 conforms substantially to interpolation decoder module 30 of FIG. 2, but interpolation decoder module 36 includes a motion information conversion module 38 that converts motion information based on translational motion and at least one other motion parameter to motion information based only on translational motion. Converting the motion information based on translational motion and at least one other motion parameter into translational motion vectors permits use of the more accurate motion information in video decoders that deploy hardware and/or software configurations that perform motion compensation using only translational motion vectors.

Motion information conversion module 38 obtains the motion information that indicates motion for the skipped frame from motion estimation module 34 or from one or more frames adjacent to the skipped video frame transmitted by encoder 12. To convert the motion information based on translational motion and at least one other motion parameter to motion information based only on translational motion, motion information conversion module 38 generates translational motion vectors for one or more pixels within a block of interest based on the motion information for the skipped frame. Motion information conversion module 38 may, for example, generate the translational motion vectors for each of the pixels by inputting the coordinates of the pixel into an affine model approximation of the motion. In other words, the output of the affine model approximation is the motion vector associated with that particular pixel.

Motion information conversion module 38 merges the translational motion vectors associated with the pixels to generate a single motion vector for the block of interest. Motion information conversion module 38 may, for example, merge the translational motion vectors of the pixels using an average operation, a median operation, or other similar mathematical operation. Motion information conversion module 38 may generate translational motion vectors for larger size blocks by recursively generating motion vectors for several smaller size blocks. Motion information conversion module 38 may, for example, recursively generate translational motion vectors for several 2 x 2 blocks, and then generate motion vectors for an 8 x 8 block by merging the motion vectors of the 2 x 2 blocks.

The conversion techniques described are for exemplary purposes only. Motion information conversion module 38 may utilize other conversion techniques to convert the motion information based translational motion and at least one other motion parameter to translational motion vectors. For example, motion information conversion module 38 may generate translational motion vectors for one or more pixels within a block of interest based on the affine model motion information. Motion information conversion module 38 selects a pixel translational motion vector and uses the selected pixels translational motion vector as a seed motion vector for a motion estimation module that outputs a translational motion vector for the block of interest. For example, the translational motion vector of the center pixel of the macroblock of interest can be used as the seeded motion vector for the macroblock. Motion estimation begins from motion vector associated with the center pixel of the macroblock. Thus, the seed motion vector acts as an initial search point within a certain search range. The affine model may be estimated via the least square fit algorithm using the motion vector of the center pixel as well as surrounding motion vectors.

Converting the motion information into translational motion vectors allows implementation of the techniques of this disclosure in video decoders that deploy hardware and/or software configurations that perform motion compensation using only translational motion vectors. Although the motion information that indicates motion based cn translational motion and at least one other motion parameter is not used, the translational motion vectors that are applied are more accurate because they are generated based on more accurate motion, information, e.g., an affine motion model approximation.

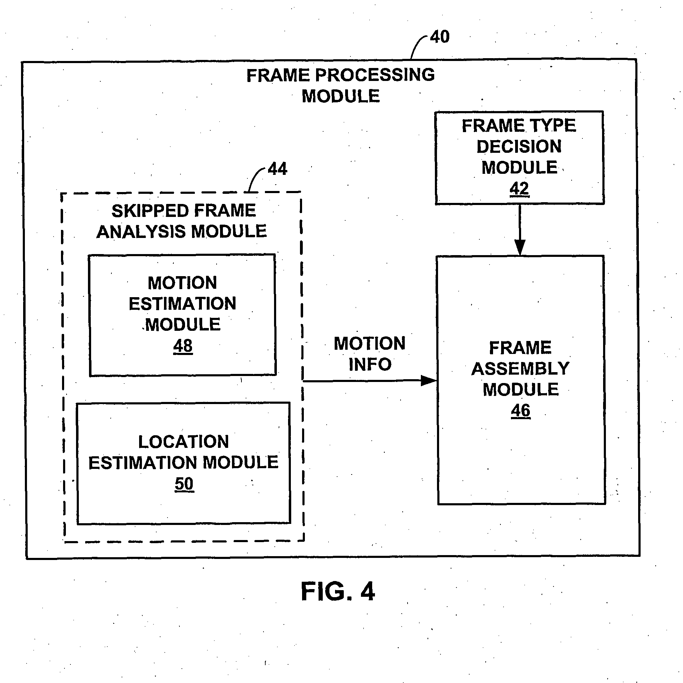

FIG 4 is a block diagram illustrating a frame processing module 40 for use in a video encoder, such as Video encoder 12 of FIG. 1. Frame processing module 40 includes a frame type decision module 42, a skipped frame analysis module 44, and a frame assembly module 46. Skipped frame analysis module 44 further includes motion estimation module 48 and location estimation module 50. In general, skipped frame analysis module 44 analyzes a frame to be skipped and generates motion information that indicates motion for the frame to be skipped based on translational motion and at least one other motion parameter. The generated motion information is transmitted within one or more video frames to assist decoder 14 in interpolating a skipped frame with improved accuracy.

Frame type decision module 42 determines whether incoming video information should be encoded in a frame, such as an I, P or B frame, or be skipped. Frame type decision module 42 may decide to skip a frame based in part on a uniform or nonuniform frame skipping function designed to reduce the overall amount of encoded information for bandwidth conservation across transmission channel 15 (FIG 1). For example, frame type decision module 42 may skip every $n^{th}$ frame, or skip a frame based on one or more dynamic skipping criteria. Frame type decision module 42 communicates the frame decision to frame assembly module 46.

Skipped frame analysis module 44 generates motion information that indicates motion for a skipped frame. Skipped frame analysis module 44 may generate motion estimation information and/or location information, each of which may form part of the skipped frame motion information provided by the encoder to assist the decoder in interpolation of the skipped frame. In particular, motion estimation module 48 generates motion information that indicates motion for the skipped frame based on translational motion and at least one other motion parameter, such as motion information based on an affine motion model. Motion estimation module 48 may generate motion information based on motion between the skipped video frame and one or more video frames adjacent to the skipped frame, such as preceding frame $F_1$ and subsequent frame $F_3$ of FIG. 1. Alternatively, motion estimation module 48 may generate motion information based on motion between a preceding frame $F_1$ and subsequent frame $F_3$.

Motion estimation module 48 may generate motion information that indicates motion for the entire skipped frame. For example, the frame to be skipped and the preceding reference frame may be subdivided into N macroblocks. Motion estimation module 48 may compute the translational motion between each of the macroblocks of the preceding frame and the frame to be skipped. Each translational motion vector corresponds to a two parameter equation (i.e., $x1 = x2+a$, $y1 = y2+c$). Motion estimation module 48 generates the affine motion information for the entire skipped video frame based on the translational motion vectors computed using the preceding frame and the skipped frame. Motion estimation module 48 may generate motion information based on the affine motion module using as little as three translational motion vectors. Various mathematical models may be employed to derive the affine motion parameters from the plurality of translational motion vectors, such as least squares estimation. In this case, location estimation module 50 may not need to generate location information because the generated motion information applies to the entire skipped frame.

Alternatively, motion estimation module 48 may generate motion information that indicates motion for particular objects or video blocks within the skipped frame. In other words, the motion information generated by motion estimation module 48 is not applicable to each of the macroblocks in the frame, but instead only a portion of the frame. In this case, location estimation module 50 generates location information that describes the portion, e.g., video blocks or objects, of the skipped video frame associated with the generated motion information. Location estimation module 50 may, for example, generate a binary bitmap that indicates the boundary of an object or particular video blocks to which the local motion information applies. Location estimation module 50 reconstructs each of the macroblocks on a pixel by pixel basis using the generated affine motion model. Location estimation module 50 concurrently reconstructs each of the macroblocks using the translational motion vectors used to approximate the affine motion parameters. Location estimation module 50 compares the distortion between the macroblocks or pixels reconstructed using the affine motion model parameters and corresponding macroblocks or pixels reconstructed using the translational motion vectors. If the distortion is above a predetermined threshold, the affine motion model is determined to not accurately approximate the macroblock associated with the large distortion and the macroblock is removed from the object. In other words, the affine model estimation is deemed to not apply to the particular macroblock or pixel. After analyzing the distortion between all the reconstructed macroblocks, the affine motion model parameters are determined to only apply to the macroblocks in the frame that have distortion values below the threshold. Location estimation module 50 may generate a binary bitmap that indicates the boundaries of the blocks or pixels to which the local motion information applies. Video blocks or objects not identified in location information may be interpolated without the potential need for particular motion information.

In another embodiment, motion estimation module 48 may not generate motion estimation information that indicates motion for the skipped frame. Location estimation module 50 may, however, generate location information that identifies portions of the skipped frame to which the motion information would have applied if it was generated by motion estimation module 48. In this manner, the decoder 14 generates motion information that indicates motion for the skipped frame, but the encoder assists the decoder in interpolating skipped frame by providing motion information indicating the objects or macroblocks to which the decoder should apply the generated motion information.

Frame assembly module 46 encodes video information designated as an encoded frame with motion information, block modes, coefficients, and other information sufficient to permit video decoder 14 (FIG. 1) to decode and present a frame of video information. Frame assembly module 46 does not actually encode and transmit incoming video information designated by frame type decision module 42 as a skipped frame. Instead, frame assembly module 46 encodes motion information received from skipped frame analysis module 44 in one or more video frames for transmission to a video decoder to assist the video decoder in interpolation of the skipped frame. Frame assembly module 46 may embed the motion information for the skipped frame within one or more encoded frames, such as within P frame 16 (FIG. 1), that precede or follows the skipped frame. In other words, frame assembly module 46 may embed the motion information for the skipped frame within a non-skipped video frame. Alternatively, frame assembly module 46 may encode motion information for the skipped frame within a video frame that is dedicated to the skipped frame motion information and transmitted independently of the P frames.

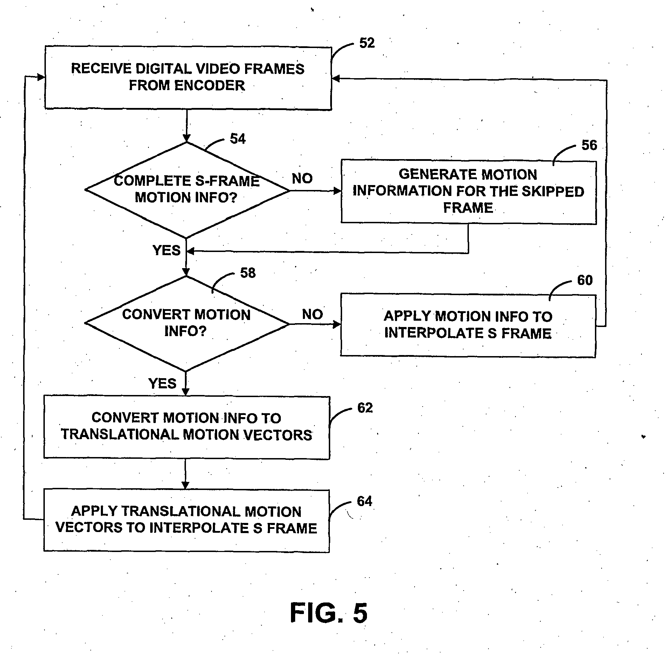

FIG. 5 is a flowchart illustrating exemplary operation of a decoder, such as video decoder 14, interpolating a skipped video frame using motion information that indicates motion for a skipped frame based on translational motion and at least one other motion parameter. Decoder 14 receives a plurality of digital video frames from a video encoder (52). Decoder 14 may, for example, receive one or more I frames, P frames and B frames from the encoder.

Decoder 14 analyzes the received frames for motion information that indicates motion for the skipped video frame (54). Decoder 14 may be configured to identify a particular type of frame or header information within a frame that indicates that the frame includes motion information for the skipped frame.

If decoder 14 does not identify motion information for the skipped frame within the received frames or identifies incomplete motion information for the skipped frame, decoder 14 generates motion information for the skipped frame (56). Decoder 14 may not be configured to recognize motion information for the skipped frames embedded within the received frames. Alternatively, the encoder may not have transmitted any motion information for the skipped frame or only transmitted location information as described above. Decoder 14 generates motion information that indicates motion for the skipped frame based on translational motion and at least one other motion parameter using motion information associated with one or more video frames adjacent to the skipped video frame, e.g., a previous frame, a previous frame and a subsequent frame, or more than two adjacent video frames. For example, decoder 14 may approximate the coefficients of an affine model using translational motion vectors associated with macroblocks of the previous reference frame.

Next, the decoder determines whether to convert the motion information that indicates motion based on translational motion and at least one other motion parameter into translational motion vectors (58). If decoder 14 is configured to apply motion information that indicates motion based on the affine motion model, then decoder 14 does not convert the motion information for the skipped frame, and instead applies the motion information that indicates motion based on translational motion and at least one other motion parameter to interpolate the skipped frame (60).

If decoder 14 is not configured to apply motion information that indicates motion based on the affine motion model and at least one other motion parameter, then decoder 14 converts the motion information into translational motion vectors (62). Decoder 14 may, for example, be configured to only perform translational motion compensation. In this case, decoder 14 converts the motion information for the skipped frame into motion information based only on translational motion. Decoder 14 may, for example, generate translational motion vectors for one or more pixels within a block of interest based on the affine motion information and merge the generated translational motion vectors of the pixels to generate a motion vector for the block of interest. Decoder 14 applies the translational motion vectors to interpolate the skipped frame or one or more macroblocks of the skipped frame (64). In this manner, the techniques of this disclosure may be utilized in video decoders that perform only translational motion compensation while still improving interpolation accuracy by using motion vectors generated based on more accurate motion information.

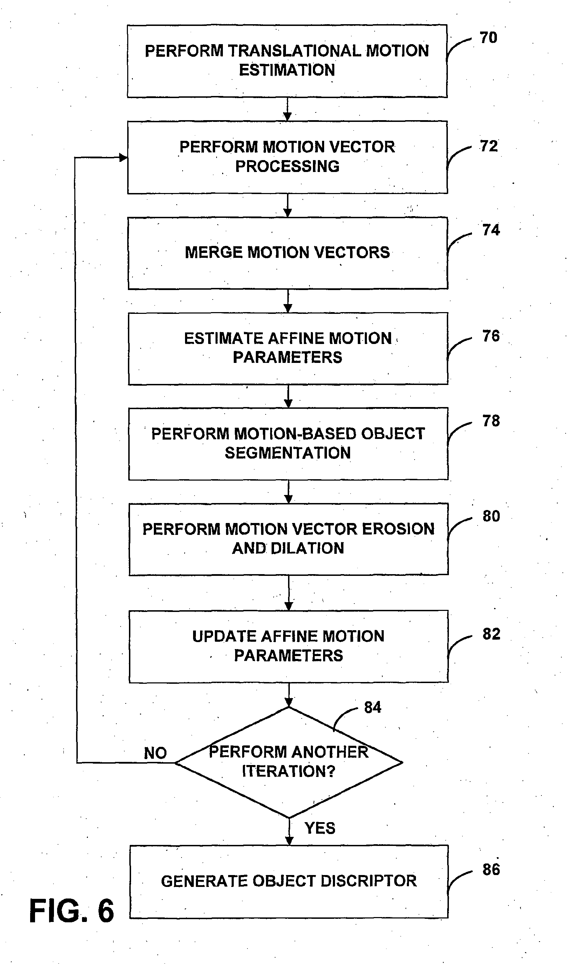

FIG. 6 is a flow diagram illustrating exemplary operation of an encoder, such as encoder 12, generating motion information for a portion of a skipped frame based on an affine motion model. Initially, encoder 12 partitions the skipped frame into fixed size blocks and performs translation motion estimation on the fixed size blocks (70). The translational motion estimation provides one or more motion vectors associated with each of the blocks. Encoder 12 may, for example, partition the frame into N macroblocks and compute a motion vector that indicates translational motion between the macroblocks and macroblocks of one or more adjacent frames.

Encoder 12 performs motion vector processing to the translational motion vectors (72). The motion vector processing may, for example, remove outlier motion vectors. If one of the N translational motion vectors points in a direction opposite of the other N-1 translational motion vectors, the significantly different motion vector may be removed. Encoder 12 merges the motion vectors (74). Encoder 12 may merge the motion vectors by averaging the motion vectors, computing a median motion vector or other arithmetic operation. In this manner, encoder 12 may generate a single motion vector for the entire macroblock. For example, if encoder 12 generates sixteen 4x4 motion vectors for a macroblock, encoder 12 may average them to form a single motion vector for the 16x16 macroblock. In this manner, the affine estimation process may be simplified because there are less motion vectors to be least squared fit. Moreover, merging the motion vectors also smoothes the motion vectors eliminate some irregular motion vectors within the macroblock.

Encoder 12 estimates the affine motion model parameters for the skipped frame based on the translational motion vectors (76). As described above, encoder 12 may derive the affine motion parameters from the plurality of translational motion vectors by finding the least squares estimation of three or more translational motion vectors.

Encoder 12 performs motion-based object segmentation to identify particular objects, macroblocks or pixels to which the estimated affine motion model applies (78). As described above in detail, encoder 12 reconstructs each of the macroblocks on a pixel by pixel basis using the generated affine motion model, concurrently reconstructs each of the macroblocks using the translational motion vectors used to approximate the affine motion parameters, and compares the distortion between the macroblocks or pixels reconstructed using the affine motion model parameters and corresponding macroblocks or pixels reconstructed using the translational motion vectors. If the distortion is above a predetermined threshold, the affine motion model is determined to not accurately approximate the macroblock or pixel and the macroblock is removed from the object. After removal of all the macroblocks or pixels with large distortions, the remaining objects, macroblocks or pixels are the pixels to which the motion information applies. Encoder 12 may generate location information that describes these remaining objects, macroblocks or pixels.

Encoder 12 performs erosion and dilation (80). The erosion and dilation smoothes object outlines, fills small holes and eliminates small projection/objects. In particular, the dilation allows objects to expand, thus potentially filling small holes and connecting disjoint objects. The erosion on the other hand shrinks objects by etching away their boundaries.

Encoder 12 updates the affine motion model based on the translational motion information from the macroblock belonging to the identified object (82). Encoder 12 then determines whether to perform another iteration to obtain a more accurate affine motion estimation (84). Encoder 12 may, for example, execute a particular number of iterations. In this case, the encoder may track the number of iterations and continue to run iterations until the specified number of iterations have been performed. After two or three iterations, however, the improvement to the affine model estimation is typically not noticeable.

After encoder 12 generates motion information based on the affine motion model, e.g:, after the encoder runs the particular number of iterations, Encoder 12 generates an object descriptor (86). The object descriptor describes location information that identifies the location of objects within the frame associated with the motion information. As described above, encoder 12 may generate a binary bitmap that indicates the boundary of an object or a particular video block to which the motion information applies. The decoder 14 will apply the motion information to the objects or macroblocks identified in the object descriptor. Video blocks or objects not identified in the object descriptor may be interpolated without the potential need for particular motion information.

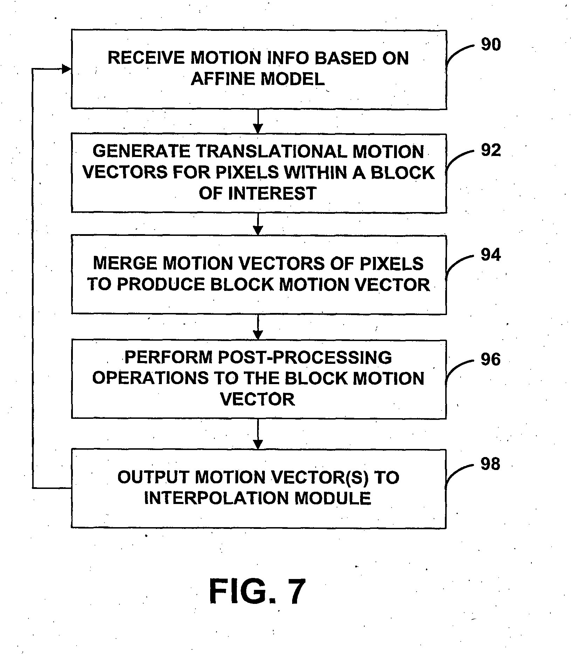

FIG 7 is a flow diagram illustrating exemplary operation of a decoder converting motion information that indicates motion for a skipped frame based on translational motion and at least one other motion parameter to motion information based only on translational motion. For example, the decoder may convert motion information that indicates motion based on affine motion model to translational motion vectors. A motion information conversion module, such as motion information conversion module 38 of decoder 14 (FIG. 2), receives the motion information that indicates motion based on the affine motion model (90). Motion information conversion module 38 may, for example, receive the motion information for the skipped frame from motion estimation module 72 or from one or more frames transmitted by encoder 12.

Motion information conversion module 38 generates translational motion vectors for one or more pixels within a block of interest based on the affine motion model (92). Motion information conversion module 38 may, for example, generate the translational motion vectors for each of the pixels by inputting the coordinates of the pixel into the affine model approximation and using the output of the affine model approximation as the motion vector associated with that particular pixel.

Motion information conversion module 38 merges the generated translational motion vectors of the plurality of pixels within the block of interest to generate a single motion vector for the entire block (94). Motion information conversion module 38 may, for example, merge the translational motion vectors of the pixels using an average operation, a median operation, or similar arithmetic operation. Motion information conversion module 3 8 may perform one or more post-processing operations on the generated block motion vector (96). Motion information conversion module 38 may perform motion vector classification, motion vector laboring, outlier selection, and window based motion vector smoothing. For example, motion information conversion module 38 may eliminates outlier motion vectors by removing motion vectors that are significantly different than the other translational motion vectors.

Motion information conversion module 38 outputs the block motion vector to interpolation module 68 (FIG. 3) to assist in the interpolation of the skipped video frame or particular macroblocks of the skipped frame (98). Converting the motion information into translational motion vectors allows implementation of the techniques of this disclosure in video decoders that deploy hardware and/or software configurations that perform only translational motion compensation. Although the motion information that indicates motion based on translational motion and at least one other motion parameter is not used, the translational motion vectors that are applied are more accurate because they are generated based on motion information estimated using the affine motion model.

As described above, motion information conversion module 38 may recursively generate translational motion vectors for several smaller size blocks and combine those motion vectors to form motion vectors for larger size blocks. Motion information conversion module 38 may, for example, recursively generate translational motion vectors for several 2 x 2 blocks, and then generate motion vectors for an 8 x 8 block by merging the motion vectors of the 2 x 2 blocks.

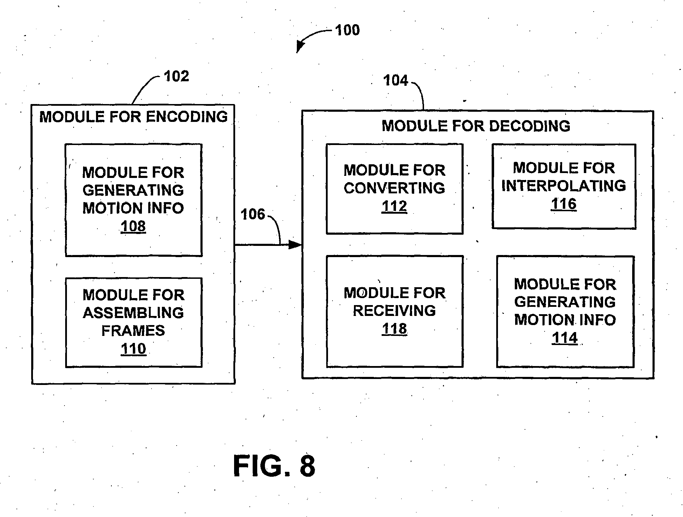

FIG. 8 is a block diagram illustrating a video encoding and decoding system 100 configured to apply motion information that indicates motion for skipped video frames based on translational motion and at least one other motion parameter to interpolate the skipped video frames. System 100 includes a module for encoding 102 and a module for decoding 104 connected by a transmission channel 106. Encoded multimedia sequences, such as video sequences, may be transmitted from module for encoding 102 to module for decoding 104 over communication channel 15. Module for encoding 102 may comprise an encoder and may form part of a digital video device capable of encoding and transmitting multimedia data. Likewise, module for decoding 104 may comprise an encoder and may form part of a digital video device capable of receiving and decoding multimedia data.

Module for encoding 102 includes a module for generating motion information 108 that generates motion information for a skipped frame and a module for assembling frames 110 that encodes the generated motion information in one or more frames for transmission to module for decoding 104 to assist module for decoding 104 in interpolation of the skipped frame. In particular, module for generating motion information 108 estimates motion information that indicates motion for a skipped frame based on translational motion and at least one other motion parameter. Additionally, module for generating motion information 108 may generate location information as part of a motion estimation process. The location information may describe particular objects or macroblocks of the skipped frame to which the motion information applies. Module for generating motion information 108 may comprise a motion estimation module and a location identification module.

Module for decoding 104 includes module for receiving 118 that receives one or more frames from module for encoding 102. The frames received from module for encoding 102 may include motion information. In this manner, module for receiving 118 receives motion information associated with one or more adjacent video frames. a module for interpolating 116 that applies motion information that indicates motion for a skipped video frame based on translational motion and at least one other motion parameter to interpolate the skipped video frame. Module for interpolating 116 may receive the motion information for the skipped video frame from module for encoding 102 via module for receiving 118. Alternatively, module for interpolating 116 may obtain a portion or all the motion information from the skipped frame from module for generating motion information 114. In this manner, module for interpolating 116 may comprise a means for obtaining motion information.

Module for generating motion information 114 generates motion information that indicates motion for a skipped video frame based on translational motion and at least one other motion parameter. Module for generating motion information 114 may generate the motion information for the skipped video frame based on motion information associated with one or more video frames adjacent to the skipped video frame.

In one embodiment, module for interpolating 116 only performs interpolation using translational motion vectors. In this case, module for decoding 104 includes a module for converting 112 that converts the motion information that indicates motion for the skipped frame based on translational motion and at least one other motion parameter to motion information that indicates motion based only on translational motion. In other words, module for converting 112 converts the motion information for the skipped frame to translational motion vectors. In one embodiment, module for converting 112 may receive the motion information from module for encoding 102 and thus comprise a means for receiving the motion information. Module for interpolating 116 applies the translational motion vectors to interpolate the skipped video frame.

In accordance with this disclosure, means for generating motion information that indicates motion for a skipped video frame based on translational motion and at least one other motion parameter may comprise frame processing module 20 (FIG. 1), motion estimation module 34 (FIG. 2 or 3), motion estimation module 48 (FIG. 4), location estimation module 50 (FIG. 4), skipped frame analysis module 44 (FIG. 4), module for generating motion information 108 (FIG. 8), module for generating motion info 114 (FIG. 8). Similarly, means for assembling frames that encode the motion information within at least one video frame may comprise frame processing module 20 (FIG. 1), frame assembly module (FIG. 4) or module for assembling frames 110 (FIG. 8). Means for converting may comprise motion info conversion module 38 (FIG. 3) or module for converting 112 (FIG. 8). Means for interpolating may comprise interpolation decoder module 24 (FIG. 1), interpolation module 32 (FIGS. 2 and 3), or module for interpolating 116 (FIG. 8). Although the above examples are provided for purposes of illustration, the disclosure may include other instances of structure that corresponds to respective means.

The affine motion model, represented by equation (1) above, approximates not only translational motion, but also rotation, shearing and scaling. The motion information based on an affine motion model provides a six-parameter approximation of the motion of the skipped frame as opposed to the two parameter approximation of conventional translational motion vectors. As described above, the techniques of this disclosure may approximate motion information using motion models that approximate motion based on more or less parameters than the affine approximation.

The techniques described herein may be implemented in hardware, software, firmware, or any combination thereof. If implemented in software, the techniques may be realized in part by a computer readable medium (or machine-readable medium) comprising program code containing instructions that, when executed, performs one or more of the methods described above. In this case, the computer readable medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like.

The program code may be executed by one or more processors, such as one or more digital signal processors (DSPs), general purpose microprocessors, an application specific integrated circuits (ASICs), field programmable logic arrays (FPGAs), or other equivalent integrated or discrete logic circuitry. In some embodiments, the functionality described herein may be provided within dedicated software modules or hardware modules configured for encoding and decoding, or incorporated in a combined video encoder-decoder (CODEC).

**Claims**

1. A method for processing digital video data, the method comprising:

> obtaining, by a video processing device, motion information that indicates motion for a skipped video frame based on translational motion and at least one other motion parameter
> wherein obtaining the motion information comprises receiving a plurality of digital video frames, and wherein the motion information is encoded within at least one of the received plurality of digital video frames;
> applying, by the video processing device, the motion information to interpolate the skipped video frame; **characterized in that**
> the motion information indicates the motion only for a portion of the skipped video frame, the method further comprising:

receiving, by the video processing device, location information that describes a location of the portion of the skipped video frame associated with the motion information, wherein applying the motion information comprises applying, by the video processing device, the motion information to interpolate the portion of the skipped video frame described by the location information.

2.   The method of claim 1, wherein the motion information indicates the motion for the skipped video frame based at least in part on an affine motion model.

3.   The method of claim 1, wherein the motion information comprises first motion information, the method further comprising:

receiving, by the video processing device, second motion information associated with one or more video frames positioned adjacent to the skipped video frame in a data stream, wherein applying the motion information comprises applying, by the video processing device, both of the first and second motion information to interpolate the skipped video frame.

4.   The method of claim 1, further comprising:

converting, by the video processing device, the motion information to motion information that indicates motion for the skipped video frame based only on translational motion, wherein applying the motion information comprises applying, by the video processing device, the motion information that indicates the motion for the skipped video frame based only on the translational motion to interpolate the skipped video frame.

5.   The method of claim 4, wherein converting the motion information to the motion information that indicates the motion for the skipped video frame based only on the translational motion comprises:

generating, by the video processing device, motion vectors based on the motion information that indicates the motion for the skipped video frame for one or more pixels within a block of pixels of interest; and merging, by the video processing device, the motion vectors for the one or more pixels to produce a motion vector for the entire block of pixels of interest.

6.   An apparatus (104) for processing digital video data, the apparatus comprising:

means for obtaining motion information that indicates motion for a skipped video frame based on translational motion and at least one other motion parameter; means for interpolating the skipped video frame, at least in part by applying the motion information; means for receiving the motion information encoded within at least one received video frame; **characterized in that** the motion information indicates the motion only for a portion of the skipped video frame, wherein the apparatus further comprising:

means for receiving location information that describes a location of the portion of the skipped video frame associated with the motion information, and wherein the interpolating means applies the motion information to interpolate the portion of the skipped video frame described by the location information.

7.   The apparatus of claim 6, wherein the motion information indicates the motion for the skipped video frame based at least in part on an affine motion model.

8.   The apparatus of claim 6 further comprising:

means for receiving (118) motion information associated with one or more video frames that are positioned adjacent to the skipped video frame in a data stream; and means for generating (114) the motion information that indicates the motion for the skipped video frame based at least in part on the motion information associated with the one or more video frames that arc positioned adjacent to the skipped video frame in the data stream.

9.   The apparatus of claim 6 further comprising means for converting (112) the motion information to motion information that indicates motion for the skipped video frame based only on translational motion, and wherein the interpolating means applies the motion information that indicates the motion for the skipped video frame based only on the translational motion to interpolate the skipped video frame.

10. The apparatus of any of claims 6 to 9, wherein each of the means for obtaining, means for interpolating, means for receiving, means for generating and means for converting is included in a processor.

11. The apparatus of claim 10, wherein the motion information comprises first motion information, and the processor is further configured to receive second motion information associated with one or more video frames adjacent to the skipped video frame and apply the first and second motion in formation to interpolate the skipped video frame.

12. The apparatus of claim 10, wherein the processor is incorporated within a wireless communication device, the device further comprising a receiver to receive digital video frames at least one of which is used by the processor to interpolate the skipped video frame.

13. The apparatus of any of claims 6 to 9, wherein the means for obtaining motion information and means for interpolating is an interpolation module.

14. The apparatus of claim 13, wherein the means for receiving and the means for generating is a motion estimation module wherein the interpolation module obtains the motion information from the motion estimation module.

15. The apparatus of claim 9, wherein the means for converting is a motion information conversion module.

16. A machine-readable medium comprising instructions that upon execution cause a machine to implement the method of any of claims 1 to 5.

17. A video encoding method comprising:

generating, by a video coding device, motion information that indicates motion for a skipped video frame based on translational motion and at least one other motion parameter; and
encoding, by the video coding device, the motion information within at least one video frame; **characterized in that**
generating the motion information comprises generating motion information that indicates motion only for a portion of the skipped video frame, the method further comprising:

generating, by the video coding device, location information that describes a location of the portion of the skipped video frame associated with the motion information; and
encoding, by the video coding device, the location information within the at least one video frame.

18. The method of claim 17, wherein generating the motion information that indicates the motion for the skipped video frame comprises generating motion information based at least in part on an affine motion model.

19. The method of claim 17, wherein generating the location information comprises:

performing, by the video coding device, motion segmentation to identify one or more objects within the skipped video frame with motion other than translational motion; and
wherein generating the motion information that indicates the motion for the portion of the skipped video frame based at least in part on the translational motion and the at least one other motion parameter comprises generating, by the video coding device, the motion information for the identified objects.

20. The method of claim 17, wherein encoding the motion information within the at least one video frame comprises encoding, by the video coding device, the motion information within a non-skipped video frame.

21. The method of claim 17, further comprising transmitting, by the video coding device, the at least one video frame to a video decoder to assist the video decoder in interpolation of the skipped video frame.

22. An apparatus (102) for encoding digital video data, the apparatus comprising:

means (108) for generating motion information that indicates motion for a skipped video frame based on translational motion and at least one other motion parameter, wherein the at least one other motion parameter comprises at least one of pixel domain rotation, pixel domain panning, and pixel domain tilting; and
means for encoding (110) the motion information within at least one video frame; **characterized in that**
the generation means (108) generates motion information that indicates motion only for a portion of the skipped video frame, generates location information that describes the portion of the skipped video frame associated with the motion information, and encodes the location information within the video frame.

23. The apparatus of claim 22, wherein the generation means generates motion information based on translational motion, performs motion segmentation to identify objects within the skipped frame with motion other than translational motion, and generates the motion information based on translational motion and at least one other motion parameter for the identified objects.

24. The apparatus of claim 22, wherein the means for generating generates motion information that indicates motion based on an affine motion model.

25. The apparatus of claim 22 wherein the means for generating is an analysis module further configured to analyze a skipped video frame, and wherein the means for encoding is an encoding module.

26. The apparatus of claim 25, further comprising a transmitter to transmit the video frame to a video decoder to assist the video decoder in interpolation of the skipped video frame.

27. The apparatus of claim 22, wherein each of the means for generating and the means for assembling is included in a processor.

28. The apparatus of claim 27, wherein the processor is configured to encode the motion information within a non-skipped video frame.

29. A machine-readable medium comprising instructions that upon execution cause a machine to implement the method of any of claim 17 to 21.

**Patentansprüche**

1. Ein Verfahren zum Verarbeiten von digitalen Videodaten, wobei das Verfahren Folgendes aufweist:

Erlangen, durch eine Videoverarbeitungseinrichtung, von Bewegungsinformation, die Bewegung für einen ausgelassenen Videorahmen anzeigt, und zwar basierend auf einer translatorischen Bewegung und wenigstens einem anderen Bewegungsparameter wobei das Erlangen der Bewegungsinformation Empfangen einer Vielzahl von digitalen Videorahmen aufweist, und wobei die Bewegungsinformation innerhalb wenigstens eines der empfangenen Vielzahl von digitalen Videorahmen codiert ist;
Anwenden, durch die Videoverarbeitungseinrichtung, der Bewegungsinformation zum Interpolieren des ausgelassenen Videorahmens;
**dadurch gekennzeichnet, dass**
die Bewegungsinformation die Bewegung nur für einen Teil des ausgelassenen Videorahmens anzeigt, wobei das Verfahren weiter Folgendes aufweist:

Empfangen, durch die Videoverarbeitungseinrichtung, von Lageinformation, die eine Lage des Teils des ausgelassenen Videorahmens beschreibt, der mit der Bewegungsinformation assoziiert ist,
wobei das Anwenden der Bewegungsinformation, Anwenden, durch die Videoverarbeitungseinrichtung, der Bewegungsinformation aufweist, um den Teil des ausgelassenen Videorahmens zu interpolieren, der von der Lageinformation beschrieben wird.

2. Verfahren nach Anspruch 1, wobei die Bewegungsinformation die Bewegung für den ausgelassenen Videorahmen basierend wenigstens teilweise auf einem Modell affiner Bewegung bzw. Affine-Motion-Modell anzeigt.

3. Verfahren nach Anspruch 1, wobei die Bewegungsinformation erste Bewegungsinformation aufweist, wobei das Verfahren weiter Folgendes aufweist:

Empfangen, durch die Videoverarbeitungseinrichtung, von zweiter Bewegungsinformation, die mit einem oder mehreren Videorahmen assoziiert ist, die angrenzend an den ausgelassenen Videorahmen in einem Datenstrom angeordnet sind,

wobei das Anwenden der Bewegungsinformation Anwenden, durch die Videoverarbeitungseinrichtung, von sowohl erster als auch zweiter Bewegungsinformation aufweist, um den ausgelassenen Videorahmen zu interpolieren.

**4.** Verfahren nach Anspruch 1, das weiter Folgendes aufweist:

Konvertieren, durch die Videoverarbeitungseinrichtung, der Bewegungsinformation in Bewegungsinformation, die eine Bewegung für den ausgelassenen Videorahmen anzeigt, und zwar basierend auf nur der translatorischen Bewegung,

wobei das Anwenden der Bewegungsinformation Anwenden, durch die Videoverarbeitungseinrichtung, der Bewegungsinformation aufweist, die die Bewegung für den ausgelassenen Videorahmen anzeigt, und zwar basierend auf nur der translatorischen Bewegung, um den ausgelassenen Videorahmen zu interpolieren.

**5.** Verfahren nach Anspruch 4, wobei das Konvertieren der Bewegungsinformation in die Bewegungsinformation, die die Bewegung für den ausgelassenen Videorahmen anzeigt, und zwar basierend auf nur der translatorischen Bewegung, Folgendes aufweist:

Generieren, durch die Videoverarbeitungseinrichtung, von Bewegungsvektoren basierend auf der Bewegungsinformation, die die Bewegung für den ausgelassenen Videorahmen für ein oder mehrere Pixel innerhalb eines Blocks von Pixel, die von Interesse sind, anzeigt; und

Zusammenführen, durch die Videoverarbeitungseinrichtung, der Bewegungsvektoren für einen oder mehrere Pixel, um einen Bewegungsvektor für den gesamten Block von Pixeln, die von Interesse sind, zu erzeugen.

**6.** Eine Vorrichtung (104) zum Verarbeiten von digitalen Videodaten, wobei die Vorrichtung Folgendes aufweist:

Mittel zum Erlangen von Bewegungsinformation, die eine Bewegung für einen ausgelassenen Videorahmen anzeigt, und zwar basierend auf translatorischer Bewegung und wenigstens einem anderen Bewegungsparameter;

Mittel zum Interpolieren des ausgelassenen Videorahmens, wobei wenigstens teilweise Bewegungsinformation angewendet wird;

Mittel zum Empfangen der Bewegungsinformation, die innerhalb wenigstens eines empfangenen Videorahmens codiert ist;

**dadurch gekennzeichnet, dass**

die Bewegungsinformation die Bewegung für nur einen Teil des ausgelassenen Videorahmens anzeigt, wobei die Vorrichtung weiter Folgendes aufweist:

Mittel zum Empfangen von Lageinformation, die eine Lage des Teils des ausgelassenen Videorahmens beschreibt, der mit der Bewegungsinformation assoziiert ist, und wobei die Interpolationsmittel die Bewegungsinformation anwenden, um den Teil des ausgelassenen Videorahmens zu interpolieren, der von der Lageinformation beschrieben wird.

**7.** Vorrichtung nach Anspruch 6, wobei die Bewegungsinformation die Bewegung für den ausgelassenen Videorahmen basierend zumindest teilweise auf einem Modell affiner Bewegung anzeigt.

**8.** Vorrichtung nach Anspruch 6, die weiter Folgendes aufweist:

Mittel zum Empfangen (118) von Bewegungsinformation, die mit einem oder mehreren Videorahmen assoziiert ist, die angrenzend an den ausgelassenen Videorahmen in einem Datenstrom angeordnet sind; und

Mittel zum Generieren (114) der Bewegungsinformation, die die Bewegung für den ausgelassenen Videorahmen basierend zumindest teilweise auf der Bewegungsinformation anzeigt, die mit einem oder mehreren Videorahmen assoziiert ist, die angrenzend an den ausgelassenen Videorahmen in dem Datenstrom positioniert sind.

**9.** Vorrichtung nach Anspruch 6, die weiter Mittel aufweist zum Konvertieren (112) der Bewegungsinformation in Bewegungsinformation, die eine Bewegung für den ausgelassenen Videorahmen anzeigt, und zwar basierend auf nur translatorischer Bewegung, und wobei die Interpolationsmittel die Bewegungsinformation anwenden, die die Bewegung für den ausgelassenen Videorahmen anzeigt, und zwar basierend auf nur der translatorischen Bewegung, um den ausgelassenen Videorahmen zu interpolieren.

10. Vorrichtung nach einem der Ansprüche 6 bis 9, wobei jedes der Mittel zum Erlangen, Mittel zum Interpolieren, Mittel zum Empfangen, Mittel zum Generieren und Mittel zum Konvertieren in einen Prozessor aufgenommen ist.

11. Vorrichtung nach Anspruch 10, wobei die Bewegungsinformation erste Bewegungsinformation aufweist, und wobei der Prozessor weiter konfiguriert ist zum Empfangen von zweiter Bewegungsinformation, die mit einem oder mehreren Videorahmen assoziiert ist, die an den ausgelassenen Videorahmen angrenzen, und zum Anwenden der ersten und zweiten Bewegungsinformation, um den ausgelassenen Videorahmen zu interpolieren.

12. Vorrichtung nach Anspruch 10, wobei der Prozessor in eine Drahtloskommunikationseinrichtung aufgenommen ist, wobei die Vorrichtung weiter einen Empfänger zum Empfangen von digitalen Videorahmen aufweist, von denen wenigstens einer von dem Prozessor verwendet wird, um den ausgelassenen Videorahmen zu interpolieren.

13. Vorrichtung nach einem der Ansprüche 6 bis 9, wobei die Mittel zum Erlangen von Bewegungsinformation und die Mittel zum Interpolieren ein Interpolationsmodul sind.

14. Vorrichtung nach Anspruch 13, wobei die Mittel zum Empfangen und die Mittel zum Generieren ein Bewegungsschätzungsmodul sind, wobei das Interpolationsmodul die Bewegungsinformation von dem Bewegungsschätzungsmodul erlangt.

15. Vorrichtung nach Anspruch 9, wobei die Mittel zum Konvertieren ein Bewegungsinformationskonvertierungsmodul sind.

16. Ein maschinenlesbares Medium, das Instruktionen aufweist, die, wenn sie ausgeführt werden, eine Maschine veranlassen, das Verfahren nach einem der Ansprüche 1 bis 5 zu implementieren.

17. Ein Videocodierverfahren, das Folgendes aufweist:

Generieren, durch eine Videocodiereinrichtung, von Bewegungsinformation, die eine Bewegung für einen ausgelassenen Videorahmen anzeigt, und zwar basierend auf einer translatorischen Bewegung und wenigstens einem weiteren Bewegungsparameter; und
Codieren, durch die Videocodiereinrichtung, der Bewegungsinformation innerhalb wenigstens eines Videorahmens;
**dadurch gekennzeichnet, dass**
das Generieren der Bewegungsinformation Generieren von Bewegungsinformation aufweist, die eine Bewegung für nur einen Teil des ausgelassenen Videorahmens anzeigt, wobei das Verfahren weiter Folgendes aufweist:

Generieren, durch die Videocodiereinrichtung, von Lageinformation, die eine Lage des Teils des ausgelassenen Videorahmens beschreibt, der mit der Bewegungsinformation assoziiert ist; und
Codieren, durch die Videocodierungseinrichtung, der Lageinformation innerhalb des wenigstens einen Videorahmens.

18. Verfahren nach Anspruch 17, wobei das Generieren von Bewegungsinformation, die die Bewegung für den ausgelassenen Videorahmen anzeigt, Generieren von Bewegungsinformation zumindest teilweise basierend auf einem Modell affiner Bewegung aufweist.

19. Verfahren nach Anspruch 17, wobei das Generieren der Bewegungsinformation Folgendes aufweist:

Durchführen, durch die Videocodierungseinrichtung, von Bewegungssegmentierung, um ein oder mehrere Objekte innerhalb des ausgelassenen Videorahmens mit einer anderen Bewegung als einer translatorischen Bewegung zu identifizieren; und
wobei das Generieren der Bewegungsinformation, die die Bewegung für den Teil des ausgelassenen Videorahmens anzeigt, und zwar basierend wenigstens teilweise auf der translatorischen Bewegung und dem wenigstens einen anderen Bewegungsparameter, Generieren, durch die Videocodiereinrichtung, der Bewegungsinformation für die identifizierten Objekte aufweist.

**20.** Verfahren nach Anspruch 17, wobei das Codieren der Bewegungsinformation innerhalb des wenigstens einen Videorahmens Codieren, durch die Videocodiereinrichtung, von Bewegungsinformation innerhalb eines nicht ausgelassenen Videorahmens aufweist.

**21.** Verfahren nach Anspruch 17, das weiter Senden, durch die Videocodiereinrichtung, des wenigstens einen Videorahmens an einen Videodecodierer aufweist, um den Videodecodierer bei der Interpolation des ausgelassenen Videorahmens zu unterstützen.

**22.** Eine Vorrichtung (102) zum Codieren von digitalen Videodaten, wobei die Vorrichtung Folgendes aufweist:

Mittel (108) zum Generieren von Bewegungsinformation, die eine Bewegung für einen ausgelassenen Videorahmen anzeigt, und zwar basierend auf einer translatorischen Bewegung und wenigstens einem weiteren Bewegungsparameter, wobei der wenigstens eine weitere Bewegungsparameter Pixel-Domain-Rotation, Pixel-Domain-Panning und Pixel-Domain-Tilting aufweist; und
Mittel zum Codieren (110) der Bewegungsinformation mit wenigstens einem Videorahmen;
**dadurch gekennzeichnet, dass**
die Generierungsmittel (108) Bewegungsinformation generieren, die eine Bewegung für nur einen Teil des ausgelassenen Videorahmens anzeigt, Lageinformation generieren, die den Teil des ausgelassenen Videorahmens beschreibt, der mit der Bewegungsinformation assoziiert ist und die Lageinformation innerhalb des Videorahmens codieren.

**23.** Vorrichtung nach Anspruch 22, wobei die Generierungsmittel Bewegungsinformation basierend auf der translatorischen Bewegung generieren, Bewegungssegmentierung durchführen, um Objekte innerhalb des ausgelassenen Rahmens mit anderer Bewegung als der translatorischen Bewegung zu identifizieren, und Bewegungsinformation basierend auf translatorischer Bewegung und wenigstens einem weiteren Bewegungsparameter für die identifizierten Objekte generieren.

**24.** Vorrichtung nach Anspruch 22, wobei die Mittel zum Generieren Bewegungsinformation generieren, die Bewegung basierend auf einem Modell affiner Bewegung anzeigt.

**25.** Vorrichtung nach Anspruch 22, wobei die Bewegungsmittel zum Generieren ein Analysemodul sind, das weiter konfiguriert ist zum Analysieren eines ausgelassenen Videorahmens, und wobei die Mittel zum Codieren ein Codierungsmodul sind.

**26.** Vorrichtung nach Anspruch 25, die weiter einen Sender zum Senden des Videorahmens an einen Videodecodierer aufweist, um den Videodecodierer bei der Interpolation des ausgelassenen Videorahmens zu unterstützen.

**27.** Vorrichtung nach Anspruch 22, wobei jedes der Mittel zum Generieren und der Mittel zum Assemblieren in einen Prozessor aufgenommen ist.

**28.** Vorrichtung nach Anspruch 27, wobei der Prozessor zum Codieren der Bewegungsinformation innerhalb eines nicht ausgelassenen Videorahmens konfiguriert ist.

**29.** Ein maschinenlesbares Medium, das Instruktionen aufweist, die bei ihrer Ausführung eine Maschine veranlassen, das Verfahren nach einem der Ansprüche 17 bis 21 zu implementieren.


**Revendications**

**1.** Procédé pour traiter des données de vidéo numérique, le procédé comprenant :

obtenir, par un dispositif de traitement vidéo, des informations de mouvement qui indiquent un mouvement pour une trame de vidéo sautée, sur la base d'un mouvement de translation et d'au moins un autre paramètre de mouvement,
dans lequel l'obtention des informations de mouvement comprend la réception d'une pluralité de trames de vidéo numérique, et dans lequel les informations de mouvement sont codées dans au moins l'une de la pluralité de trames de vidéo numérique reçues ;
appliquer, par le dispositif de traitement de vidéo, les informations de mouvement pour interpoler la trame de vidéo sautée ; **caractérisé en ce que**

les informations de mouvement indiquent le mouvement seulement pour une portion de la trame de vidéo sautée, le procédé comprenant en outre :

recevoir, par le dispositif de traitement de vidéo, des informations de position qui décrivent une position de la portion de la trame de vidéo sautée associée aux informations de mouvement,

dans lequel l'application des informations de mouvement comprend l'application, par le dispositif de traitement de vidéo, des informations de mouvement pour interpoler la portion de la trame de vidéo sautée décrite par les informations de position.

2. Procédé selon la revendication 1, dans lequel les informations de mouvement indiquent le mouvement pour la trame de vidéo sautée sur la base au moins en partie d'un modèle de mouvement affine.

3. Procédé selon la revendication 1, dans lequel les informations de mouvement comprennent des premières informations de mouvement, le procédé comprenant en outre :

recevoir, par le dispositif de traitement de vidéo, des deuxièmes informations de mouvement associées à une ou plusieurs trames de vidéo positionnées à côté de la trame de vidéo sautée dans un flux de données,

dans lequel l'application des informations de mouvement comprend l'application, par le dispositif de traitement de vidéo, à la fois des premières et des deuxièmes informations de mouvement pour interpoler la trame de vidéo sautée.

4. Procédé selon la revendication 1, comprenant en outre :

convertir, par le dispositif de traitement, les informations de mouvement en des informations de mouvement qui indiquent le mouvement de la trame de vidéo sautée sur la base seulement du mouvement de translation,

dans lequel l'application des informations de mouvement comprend l'application, par le dispositif de traitement de vidéo, des informations de mouvement qui indiquent le mouvement de la trame de vidéo sautée sur la base seulement du mouvement de translation pour interpoler la trame de vidéo sautée.

5. Procédé selon la revendication 4, dans lequel la conversion des informations de mouvement en les informations de mouvement qui indiquent le mouvement pour la trame de vidéo sautée sur la base seulement du mouvement de translation comprend :

générer, par le dispositif de traitement de vidéo, des vecteurs de mouvement sur la base des informations de mouvement qui indiquent le mouvement pour la trame de vidéo sautée pour un ou plusieurs pixels dans un bloc de pixels d'intérêt ; et

fusionner, par le dispositif de traitement de vidéo, les vecteurs de mouvement pour lesdits un ou plusieurs pixels pour produire un vecteur de mouvement pour le bloc entier de pixels d'intérêt.

6. Dispositif (104) pour traiter des données de vidéo numérique, le dispositif comprenant :

des moyens pour obtenir des informations de mouvement qui indiquent un mouvement pour une trame de vidéo sautée sur la base d'un mouvement de translation et d'au moins un autre paramètre de mouvement ;

des moyens pour interpoler la trame de vidéo sautée, au moins en partie en appliquant les informations de mouvement ;

des moyens pour recevoir les informations de mouvement codées dans au moins une trame de vidéo reçue ;

**caractérisé en ce que**

les informations de mouvement indiquent le mouvement seulement pour une portion de la trame de vidéo sautée, le dispositif comprenant en outre :

des moyens pour recevoir des informations de position qui décrive la position de la portion de la trame de vidéo sautée associée aux informations de mouvement, et dans lequel les moyens pour interpoler appliquent les informations de mouvement pour interpoler la portion de la trame de vidéo sautée décrite par les informations de position.

7. Dispositif selon la revendication 6, dans lequel les informations de mouvement indiquent le mouvement pour la trame de vidéo sautée sur la base au moins en partie d'un modèle de mouvement affine.

**8.** Dispositif selon la revendication 6, comprenant en outre :

des moyens pour recevoir (118) des informations de mouvement associées à une ou plusieurs trames de vidéo qui sont positionnées à côté de la trame de vidéo sautée dans un flux de données ; et
des moyens pour générer (114) les informations de mouvement qui indiquent le mouvement pour la trame de vidéo sautée sur la base au moins en partie des informations de mouvement associées auxdites une ou plusieurs trames de vidéo qui sont positionnées à côté de la trame de vidéo sautée dans le flux de données.

**9.** Dispositif selon la revendication 6, comprenant en outre des moyens pour convertir (112) les informations de mouvement en informations qui indiquent le mouvement pour la trame de vidéo sautée sur la base seulement d'un mouvement de translation, et dans lequel les moyens d'interpolation appliquent les informations de mouvement qui indiquent le mouvement pour la trame de vidéo sautée sur la base seulement du mouvement de translation pour interpoler la trame de vidéo sautée.

**10.** Dispositif selon l'une quelconque des revendications 6 à 9, dans lequel chacun des moyens pour obtenir, des moyens pour interpoler, des moyens pour recevoir, des moyens pour générer et des moyens pour convertir sont inclus dans un processeur.

**11.** Dispositif selon la revendication 10, dans lequel les informations de mouvement comprennent des premières informations de mouvement, et le processeur est en outre agencé pour recevoir des deuxièmes informations de mouvement associées à une ou plusieurs trames de vidéo adjacentes à la trame de vidéo sautée et pour appliquer les premières et deuxièmes informations de mouvement pour interpoler la trame de vidéo sautée.

**12.** Dispositif selon la revendication 10, dans lequel le processeur est incorporé dans un dispositif de communication sans fil, le dispositif comprenant en outre un récepteur pour recevoir des trames de vidéo numérique dont au moins l'une est utilisée par le processeur pour interpoler la trame de vidéo sautée.

**13.** Dispositif selon l'une quelconque des revendications 6 à 9, dans lequel les moyens pour obtenir des informations de mouvement et les moyens pour interpoler sont un module d'interpolation.

**14.** Dispositif selon la revendication 13, dans lequel les moyens pour recevoir et les moyens pour générer sont un module d'estimation de mouvement, et dans lequel le module d'interpolation obtient les informations de mouvement à partir du module d'estimation de mouvement.

**15.** Dispositif selon la revendication 9, dans lequel les moyens pour convertir sont un module de conversion d'informations de mouvement.

**16.** Support lisible par une machine comprenant des instructions qui lors de leur exécution amènent une machine à mettre en oeuvre le procédé de l'une quelconque des revendications 1 à 5.

**17.** Procédé de codage de vidéo comprenant :

générer, par un dispositif de codage de vidéo, des informations de mouvement qui indiquent un mouvement pour une trame de vidéo sautée sur la base d'un mouvement de translation et d'au moins un autre paramètre de mouvement ; et
coder, par le dispositif de codage de vidéo, les informations de mouvement dans au moins une trame de vidéo ;

**caractérisé en ce que**

la génération des informations de mouvement comprend la génération d'informations de mouvement qui indique un mouvement seulement pour une portion de la trame de vidéo sautée, le procédé comprenant en outre :

générer, par le dispositif de codage de vidéo, des informations de position qui décrive une position de la portion de la trame de vidéo sautée associée aux informations de mouvement ; et
coder, par le dispositif de codage de vidéo, les informations de position dans ladite au moins une trame de vidéo.

**18.** Procédé selon la revendication 17, dans lequel la génération des informations de mouvement qui indiquent le mouvement pour la trame de vidéo sautée comprend la génération d'informations de mouvement sur la base au moins en partie d'un modèle de mouvement affine.

19. Procédé selon la revendication 17, dans lequel la génération des informations de position comprend :

réaliser, par le dispositif de codage de vidéo, une segmentation de mouvement pour identifier un ou plusieurs objets dans la trame de vidéo sautée ayant un mouvement autre qu'un mouvement de translation ; et
dans lequel la génération des informations de mouvement qui indiquent le mouvement pour la portion de la trame de vidéo sautée sur la base au moins en partie du mouvement de translation et dudit au moins un autre paramètre de mouvement comprend la génération, par le dispositif de codage de vidéo, des informations de mouvement pour les objets identifiés.

20. Procédé selon la revendication 17, dans lequel le codage des informations de mouvement dans ladite au moins une trame de vidéo comprend le codage, par le dispositif de codage de vidéo, des informations de mouvement dans une trame de vidéo non sautée.

21. Procédé selon la revendication 17, comprenant en outre la transmission, par le dispositif de codage de vidéo, de ladite au moins une trame de vidéo à un décodeur de vidéo pour assister le décodeur de vidéo dans l'interpolation de la trame de vidéo sautée.

22. Dispositif (102) pour coder des données de vidéo numérique, le dispositif comprenant :

des moyens (108) pour générer des informations de mouvement qui indiquent un mouvement pour une trame de vidéo sautée sur la base d'un mouvement de translation et d'au moins un autre paramètre de mouvement, ledit au moins un autre paramètre de mouvement comprenant au moins une rotation dans le domaine des pixels, un balayage panoramique dans le domaine des pixels, et une inclinaison dans le domaine des pixels ; et
des moyens pour coder (110) les informations de mouvement dans au moins une trame de vidéo ; **caractérisé en ce que**
les moyens de génération (108) génèrent des informations de mouvement qui indiquent un mouvement seulement pour une portion de la trame de vidéo sautée, génèrent des informations de position qui décrivent la portion de la trame de vidéo sautée associée aux informations de mouvement, et codent les informations de position dans la trame de vidéo.

23. Dispositif selon la revendication 22, dans lequel les moyens de génération génèrent des informations de mouvement sur la base d'un mouvement de translation, réalisent une segmentation de mouvement pour identifier des objets dans la trame sautée ayant un mouvement autre qu'un mouvement de translation, et génèrent des informations de mouvement sur la base du mouvement de translation et d'au moins un autre paramètre de mouvement pour les objets identifiés.

24. Dispositif selon la revendication 22, dans lequel les moyens pour générer génèrent des informations de mouvement qui indiquent un mouvement sur la base d'un modèle de mouvement affine.

25. Dispositif selon la revendication 22, dans lequel les moyens pour générer sont un module d'analyse agencé en outre pour analyser une trame de vidéo sautée, et dans lequel les moyens pour coder sont un module de codage.

26. Dispositif selon la revendication 25, comprenant en outre un émetteur pour transmettre la trame de vidéo à un décodeur de vidéo pour assister le décodeur de vidéo dans l'interpolation de la trame de vidéo sautée.

27. Dispositif selon la revendication 22, dans lequel chacun des moyens pour générer et des moyens pour assembler est inclus dans un processeur.

28. Dispositif selon la revendication 27, dans lequel le processeur est agencé pour coder les informations de mouvement dans une trame de vidéo non sautée.

29. Support lisible par un ordinateur comprenant des instructions qui, lors de leur exécution, amènent une machine à mettre en oeuvre le procédé de l'une quelconque des revendications 17 à 21.

**FIG. 1**

EP 1 929 788 B1

FIG. 2

FIG. 3

FIG. 4

**FIG. 5**

```
┌─────────────────────────────────┐
│  PERFORM TRANSLATIONAL MOTION   │   70
│            ESTIMATION           │
└─────────────────────────────────┘
                │
                ▼
┌─────────────────────────────────┐
│     PERFORM MOTION VECTOR       │   72
│          PROCESSING             │
└─────────────────────────────────┘
                │
                ▼
┌─────────────────────────────────┐
│      MERGE MOTION VECTORS       │   74
└─────────────────────────────────┘
                │
                ▼
┌─────────────────────────────────┐
│     ESTIMATE AFFINE MOTION      │   76
│          PARAMETERS             │
└─────────────────────────────────┘
                │
                ▼
┌─────────────────────────────────┐
│  PERFORM MOTION-BASED OBJECT    │   78
│          SEGMENTATION           │
└─────────────────────────────────┘
                │
                ▼
┌─────────────────────────────────┐
│  PERFORM MOTION VECTOR EROSION  │   80
│          AND DILATION           │
└─────────────────────────────────┘
                │
                ▼
┌─────────────────────────────────┐
│      UPDATE AFFINE MOTION       │   82
│          PARAMETERS             │
└─────────────────────────────────┘
                │
                ▼
              ╱   ╲   84
      NO   ╱  PERFORM ANOTHER  ╲
      ◄───╱     ITERATION?      ╲
            ╲                   ╱
              ╲               ╱
                 │ YES
                 ▼
┌─────────────────────────────────┐
│   GENERATE OBJECT DISCRIPTOR    │   86
└─────────────────────────────────┘
```

FIG. 6

27

RECEIVE MOTION INFO BASED ON AFFINE MODEL — 90

GENERATE TRANSLATIONAL MOTION VECTORS FOR PIXELS WITHIN A BLOCK OF INTEREST — 92

MERGE MOTION VECTORS OF PIXELS TO PRODUCE BLOCK MOTION VECTOR — 94

PERFORM POST-PROCESSING OPERATIONS TO THE BLOCK MOTION VECTOR — 96

OUTPUT MOTION VECTOR(S) TO INTERPOLATION MODULE — 98

FIG. 7

—100

—102

—104

| MODULE FOR ENCODING | | MODULE FOR DECODING | |
|---|---|---|---|
| MODULE FOR GENERATING MOTION INFO 108 | | MODULE FOR CONVERTING 112 | MODULE FOR INTERPOLATING 116 |
| MODULE FOR ASSEMBLING FRAMES 110 | 106 → | MODULE FOR RECEIVING 118 | MODULE FOR GENERATING MOTION INFO 114 |

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAN LIU et al.** Non-linear Motion-compensated Interpolation for Low Bit rate Video. *Proceedings of SPIE,* 2000, vol. 4115, 203-213